# EUROPÄISCHE PATENTSCHRIFT

(11) **EP 0 795 275 B1**
(45) Veröffentlichungstag und Bekanntmachung des Hinweises auf die Patenterteilung: **11.12.2002**
(21) Anmeldenummer: 97104084.5
(22) Anmeldetag: 11.03.1997
(51) Int. Cl.: A23K 1/18, A01K 15/02

(54) **Beuteimitierendes, Stückiges Futtermittel**
Prey-like animal feedstuf in pieces
Aliment pour animaux en morceaux imitant une proie

(30) Priorität: 16.03.1996 DE 19610389
(43) Veröffentlichungstag der Anmeldung: 17.09.1997
(73) Patentinhaber: Saric, Krunoslav Dr., D-27283 Verden an der Aller (DE)
(72) Erfinder: Saric, Krunoslav Dr., D-27283 Verden an der Aller (DE)
(74) Vertreter: Hoffmeister, Helmut, Dr. Dipl.-Phys.

(56) Entgegenhaltungen:
- EP-A- 0 088 574
- DE-A- 2 019 715
- DE-A- 2 227 164
- DE-A- 2 553 576
- DE-U- 29 501 558
- DE-U- 29 519 685

## Beschreibung

Die Erfindung betrifft beuteimitierendes, stückiges Futtermittel, insbesondere für Katzen und Hunde, dessen Stückelung jeweils eine geschlossene äußere Form aufweist und das aus einem freßbaren Außenmantel aus einem gebackenen Teig und einem von diesem umschlossenen weiteren Futteranteil besteht, der aus mehreren freßbaren Teilchen besteht.

Ein solches Futtermittel ist bekannt aus der DE-AS 25 53 576. Das bekannte Futtermittel ist dadurch gekennzeichnet, daß es gewichts- und größenmäßig jeweils einem Beutetier der Katze entspricht, jeweils eine dem Körper des Beutetiers entsprechende äußere Form z. B. die einer Maus hat und aus einem Futterkern aus frischem Fleisch, einer den Futterkern umschließenden Zwischenschicht und aus einer konsistenten Außenhaut besteht, vorzugsweise aus einem Teig aus Getreidemehl, Kartoffelmehl gebildeter überzug ist.

In der genannten vorveröffentlichten Auslegeschrift wird eingehend erläutert, welche Vorteile ein Futtermittel hat, das in Portionen verfüttert wird und eine beuteimitierende Form hat. Es wird auch auf die Nachteile der üblichen Napffütterung hingewiesen. Nachteilig bei der bekannten Form des portionierten, beuteimitierenden Futtermittels ist jedoch, daß außer einer Form- und Geruchsanmutung das Futtermittel keine initiierenden Reize auf das zu fütternde Tier ausübt.

Es stellt sich daher die Aufgabe, ein Futtermittel der eingangs genannten Art anzugeben, das weitere Reize hervorruft, mit denen das zu fütternde Tier angesprochen oder erfreut wird.

Diese Aufgabe wird gelöst bei einem stückigen Futtermittel der eingangs genannten Art, das dadurch gekennzeichnet ist, daß die freßbaren Teilchen kross gebacken sind und eine mittlere Siebgröße zwischen 0,2 bis 10 mm haben und daß die freßbaren Teilchen in einem Hohlraum innerhalb des Außenmantels beweglich angeordnet sind und beim Bewegen des Futtermittelstücks miteinander und mit dem Außermantel (1) zusammenstoßen und Geräusche hervorrufen.

Je nach der Konsistenz der Teilchen können klingelnde, scheppernde, reibende oder dergleichen Geräusche hervorgerufen werden, die den Hörsinn des Haustieres ansprechen und seinen Jagdinstinkt, jedenfalls für eine gewisse Zeit, wecken.

Der umhüllende Außenmantel besteht aus einem gebackenen Teig, der mit Fleisch oder Fleischextrakt angereichert ist. Vorzugsweise sollte der Außenmantel von der Menge her so portioniert werden, daß er völlig aufgefressen wird.

Der Außenmantel kann aus mehreren Schichten hergestellt werden, nämlich aus einer trockenen Außenschicht und aus einer feuchteren Schicht als innerer Schicht, so daß auch hier das Beutetier imitiert wird und gleichzeitig dem Tier eine schmackhafte, quasi frische Nahrung geboten wird.

Die Außenseite des Außenmantels kann aufgerauht, mit abstehenden Fasern versehen, eingefärbt und/oder mit Duftstoffen versehen werden kann, so daß sich weitere Reize für das zu fütternde Tier ergeben.

Der Außenmantel kann verschiedene Formen und Größen haben. Er kann auch plastisch einer bestimmten Tierform nachgeformt sein, bevorzugt kann der Außenmantel eine Maus- oder Fischform haben. Er kann aber auch als Ovoid geformt sein, d. h. eine Faß-, Brötchen- oder Eiform haben.

Ein reizvolles Zusammenspiel von Mensch und Tier ergibt sich dann, wenn das beuteimitierende Futtermittel bewegt werden kann. Bevorzugt ist deshalb der Außenmantel mit einer Öse zum Einfädeln einer Schnur zu versehen, an der das Futtermittel hin und her gezogen werden kann.

Vorzugsweise sollten die umschlossenen Teilchen eine mittlere Siebgröße zwischen 0,2 bis 10 mm haben. Die umschlossenen Teilchen bestehen vorzugsweise in ihrer Grundsubstanz aus Kohlehydraten, Proteinen, Fett, Fasern und Mineralstoffen.

Ein weiterer Vorteil ist, daß die umschlossenen Teilchen auch veterinärmedizinische Arzneimittel, Vitamine, Spurenelemente, Aminosäuren, Konservierungsmittel, Antioxidantien oder Geschmackskorrigentien enthalten können. Insbesondere das Verabreichen von veterinärmedizinischen Arzneimitteln kann durch ein portioniertes Futtermittel der vorbezeichneten Art sehr erleichtert werden.

Die umschlossenen Teilchen können dragiert sein, also eine geschmacklich besonders anreizende Hülle haben, in der sich ein weniger attraktiver Kern verbirgt.

Die Masse der Portion kann der eines Beutetiers entsprechen, also etwa zwischen 0,5 und 50 g betragen, wovon der Außenmantel wenigstens 50 Gew.- % umfaßt. Eine ausgewachsene Maus hat etwa ein Gewicht von 30 g, so daß hier eine Richtgröße gegeben ist. Es kann aber auch eine wesentlich kleinere Gewichtsgröße gewählt werden, etwa wie bei einem Knabbergebäck, wie es für den menschlichen Genuß bekannt ist. Hier liegt die Masse des einzelnen Stücks bei etwa 0,5 bis 1,5 g. Die Futtermittelstückelungen können bevorzugt dadurch hergestellt werden, daß der Außenmantel in Rohrform extrudiert wird und nach Befüllung kissenartig abgelängt und anschließend getrocknet und gebacken wird.

Die genannten Teilchen können auch nach dem "Ravioli-Prinzip" hergestellt werden. Dies geschieht dadurch, daß zunächst ein Teig-Teppich ausgelegt wird, rasterartig mit kleinen Häufchen von Teilchen belegt wird (jeweils 10 bis 20 Stück) und anschließend der zweite Teig-Teppich aufgelegt wird. Anschließend erfolgt ein Ausstanzen, wobei die beiden Teig-Teppiche an den Stanzrändern haften und die Teilchen umschließen. Anschließend erfolgt ein Trocknen und Backen.

Die Begriffe "Trocknen" und "Backen" gehen ineinander über. Üblicherweise erfolgt vor dem Backen bei ca. 180°C ein Vortrocknen, um die Feuchte zunächst schonend zu entziehen. Die Teilchen können jedoch auch lediglich bei 100°C getrocknet werden.

Aus der Literatur sind zahlreiche Beispiele für Futterzusammensetzungen für Haustiere bekannt. Sowohl der Außenmantel als auch die umschlossenen Teilchen können in verschiedenster Zusammensetzung angeboten werden. Dies hängt von der angesprochenen Tierart ab, von ihrem Futterbedarf, von ihren Futtergewohnheiten und von ihren Bedürfnissen. Als Beispiele werden die folgenden Rezepturen angegeben:

### Beispiel für die Zusammensetzung des Außenmantels:

Kasein-Mixtur 0,1 - 10 %
Weizen-Mais-Reis-Stärke-Mixtur 3,5 - 70 %
Sojaisolat 0,01 - 5 %
Weizengluten 0,05 - 15 %
Speisefett (Schmalz, Talg, Butter) 0,5 - 10 %
Pflanzenöl 0,5 - 10 %
Fleischextrakte 1,0 - 20 %
Aminosäuremixtur 0,05 - 0,2 %
Hydrolisiertes Fleischmehl 1,0 - 15 %
Emulgator 0,05 - 3 %
Kaliumsorbat 0,0 - 0,35 %
Vitaminmixtur 0,01 - 0,2 %
Vollei-Pulver 0,1 - 5 %
Mineralstoffmischung 0,01 - 0,2 %
getrocknetes Fleisch 1,0 - 30 %
Rohrzucker 0,01 - 5 %
Fischmehl 0,0 - 10 %
Speisehefemixtur 0,01 - 5 %
Joghurtpulver 0,0 - 10 %
Polyphosphat-Mischung 0,05 - 0,2 %
Gelatine 0,1 - 5,0 %
weitere Ballaststoffe 0,1 - 3 %
Zitronensäure 0,01 - 0,2 %
Apfelsäure 0,01 - 0,2 %
Trinkwasser auffüllen auf 100 %
Vorgenannte Angaben in Gew.-%

Aus einer vorgenannten Mischung wird ein Backteig gemischt, extrudiert und schonend getrocknet, gegebenenfalls gebacken, wobei die Endfeuchte 5,0 - 20 % beträgt.

Der Teig wird vorzugsweise in Schlauchform extrudiert. Die fertiggebackenen, geräuscheerzeugenden Teilchen werden über ein Mundstück eingelegt. Anschließend wird das Schlauchstück mit den umhüllten Teilchen abgelängt, getrocknet und gebacken. Die eingeschlossene Luft vergrößert ihr Volumen bei Erhitzung und bläht das Futtermittelteilchen auf. Das Gewicht der einzelnen Stückelung beträgt dann etwa 0,5 bis 1,5 g.

### Rezeptur für umschlossene Teilchen:

Gelatine 0,1 - 5,0 %
Sojaisolat 0,5 - 25 %
getrocknetes Fleisch 0,5 - 25 %
Kasein 5,0 - 50 %
Mineralstoffmixtur 0,1 - 20 %
Weizen-Mais-Reis-Mehl-Mischung 10 - 60 %
Rohrzucker 0,1 - 10 %
hydrolisiertes Fleischmehl 1,0 - 20 %
Ballaststoffe 0,1 - 3,5 %
Hefepulver 1,0 - 10 %
Kaliumsorbat 0,0 - 0,35 %
Lignin 0,0 - 10 %
Zitronensäure 0,0 - 0,5 %
Hinzu kommen Wirkstoffe wie Vitamine, Aminosäuren, Fettsäuren, Heilpflanzenprodukte und Arzneimittel in wechselnden, nach den Bedürfnissen ausgesuchten Mengen. Trinkwasser aufgefüllt auf 100 Gew.-%

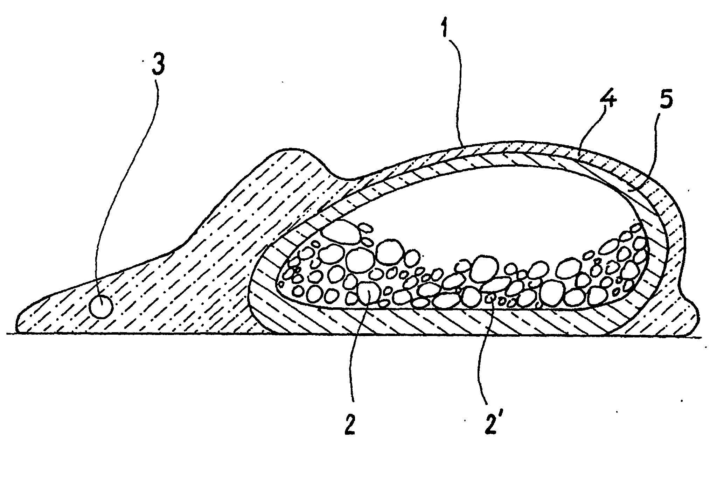

Die Figur zeigt ein Ausführungsbeispiel in Form einer Maus. Mit 1 ist der Außenmantel bezeichnet, während mit 2, 2' die umschlossenen Teilchen dargestellt sind, die so kross gebacken sind, daß sie beim Zusammenstoßen raschelnde Geräusche von sich geben, die durch den Außenmantel hindurchdringen und den Hörsinn des angesprochenen Haustiers ansprechen.

Die Spitze des Futtermittel-Stückes ist mit einer Öse 3 versehen, durch die ein Faden hindurchgezogen werden kann. Anstelle einer Mausform kann auch eine Ovoid- oder Fischform gewählt werden, d.h. im Prinzip alle Formen, die sich durch die vorgenannten Herstellungsverfahren produzieren lassen.

Zur Herstellung des Futtermittelstücke bevorzugt ist eine Verfahrensweise, die nach der Herstellung der sogenannten "Ravioli" funktioniert. Es wird zunächst ein Teig-Teppich ausgelegt und in bestimmten Abständen und Rasterungen jeweils 10 bis 20 bereits fertiggebackene Teilchen häufchenweise plaziert. Anschließend wird der mit Teilchen versehene Teig-Teppich mit einem zweiten Teig-Teppich überlegt und zwischen den Teilchen-Häufchen ausgestanzt, getrocknet und gebacken. Durch Hinzufügung von Treibmitteln zum Teig ist eine Aufblähung zu erreichen, d.h. es wird ein Hohlraum um die Teilchen erzeugt.

Das fertige Produkt gibt scheppernde Geräusche sowohl beim Fallenlassen oder Legen als auch beim Berühren mit den Pfoten des Tieres von sich und hat damit einen den Jagdinstinkt fördernden Effekt.

Der Außenmantel 1 kann auch aus mehreren Schichten bestehen, nämlich aus einer trockenen Außenschicht 4 und aus einer feuchteren Innenschicht 5. Die Außenseite des Außenmantels 1 kann aufgerauht, mit abstehenden Fasern versehen, eingefärbt und/oder mit Duftstoffen versehen sein (nicht dargestellt).

## Patentansprüche

1. Beuteimitierendes, stückiges Futtermittel, insbesondere für Katzen und Hunde, dessen Stückelung jeweils eine geschlossene äußere Form aufweist und das aus einem freßbaren Außenmantel (1) aus einem Teig und einem von diesem umschlossenen weiteren Futteranteil besteht, der aus mehreren freßbaren Teilchen besteht (2, 2')
**dadurch gekennzeichnet, daß** der umhüllende Außenmantel (1) aus einem gebackenen Teig besteht, der mit Fleisch oder Fleischextrakt angereichert ist und daß die freßbaren Teilchen (2, 2') kross gebacken sind und eine mittlere-Siebgröße zwischen 0,2 bis 10 mm haben und daß die freßbaren Teilchen (2, 2') innerhalb des Außenmantels (1) beweglich angeordnet sind und beim Bewegen des Furttermittel-Stücks miteinander und mit dem Außenmantel (1) zusammenstoßen und Geräusche hervorrufen.

2. Futtermittel nach Anspruch 1 oder 2, **dadurch gekennzeichnet, daß** der freßbare Außenmantel aus einer trockenen Außenschicht (4) und aus einer feuchteren Innenschicht (5) besteht.

3. Futtermittel nach Anspruch 1 bis 2, **dadurch gekennzeichnet, daß** die Außenseite des Außenmantels (1) aufgerauht, mit abstehenden Fasern versehen, eingefärbt und/oder mit Duftstoffen versehen ist.

4. Futtermittel nach einem der vorhergehenden Ansprüche, **dadurch gekennzeichnet, daß** der Außenmantel (1) Maus- oder Fischform hat.

5. Futtermittel nach einem der vorhergehenden Ansprüche, **dadurch gekennzeichnet, daß** das Futtermittel mit einer Öse (3) zum Einfädeln einer Schnur versehen ist.

6. Futtermittel nach einem der vorhergehenden Ansprüche, **dadurch gekennzeichnet, daß** die umschlossenen Teilchen (2, 2') in ihrer Grundsubstanz aus Kohlehydraten, Proteinen, Fett, Fasern und Mineralstoffen bestehen.

7. Futtermittel nach einem der vorhergehenden Ansprüche, **dadurch gekennzeichnet, daß** die umschlossenen Teilchen (2, 2') veterinärmedizinische Arzneimittel, Vitamine, Spurenelemente, Aminosäuren, Konservierungsmittel, Antioxidantien oder Geschmackskorrigentien enthalten.

8. Futtermittel nach einem der vorhergehenden Ansprüche, **dadurch gekennzeichnet, daß** die umschlossenen Teilchen (2, 2') dragiert sind.

9. Futtermittel nach einem der vorhergehenden Ansprüche, **dadurch gekennzeichnet, daß** die Masse der Stückchen zwischen 0,50 und 50 g beträgt, wovon der Außenmantel (1) wenigstens 50 Gew.-% umfaßt.

10. Futtermittel nach einem der vorhergehenden Ansprüche, **dadurch gekennzeichnet, daß** der Außenmantel in Rohrform extrudiert und nach Befüllung kissenartig abgelängt ist und anschließend getrocknet und/oder gebacken ist.

11. Futtermittel nach einem der vorhergehenden Ansprüche, **dadurch gekennzeichnet, daß** der Außenmantel aus zwei Teigschichten besteht, die übereinanderliegend nach Ravioli-Art im Mittelbereich mit Teilchen befüllt, ausgestanzt, getrocknet und/oder gebacken sind.

## Claims

1. A prey-imitating feeding stuff in pieces, particularly for cats and dogs, the pieces having a closed outer shape and comprising an edible outer jacket (1) made of dough and surrounding a second food component comprising a number of edible particles (2, 2'), **characterised in that** the surrounding outer jacket (1) is made of baked dough enriched with meat or meat extract, the edible particles (2, 2') are baked till crisp and have an average particle size between 0.2 and 10 mm, the edible particles (2, 2') are disposed so as to be movable inside the jacket (1), and when the piece of food moves the particles collide with one another and with the jacket (1) and make a noise.

2. A feeding stuff according to claim 1 or 2, **characterised in that** the edible jacket comprises a dry outer layer (4) and a relatively moist inner layer (5).

3. A feeding stuff according to claim 1 or 2, **characterised in that** the outside of the jacket (1) is roughened, provided with projecting fibres, dyed and/or perfumed.

4. A feeding stuff according to any of the preceding claims, **characterised in that** the outer jacket (1) is mouse or fish-shaped.

5. A feeding stuff according to any of the preceding claims, **characterised in that** the substance is formed with an eyelet (3) for inserting a cord.

6. A feeding stuff according to any of the preceding claims, **characterised in that** the enclosed particles (2, 2') consist mainly of carbohydrates, proteins, fat, fibres and minerals.

7. A feeding stuff according to any of the preceding claims, **characterised in that** the enclosed particles (2, 2') contain veterinary medicines, vitamins, trace elements, amino acids, preservatives, anti-oxidants or flavourings.

8. A feeding stuff according to any of the preceding claims, **characterised in that** the enclosed particles (2, 2') are sugar-coated.

9. A feeding stuff according to any of the preceding claims, **characterised in that** the pieces weigh between 0.50 and 50 g, the outer jacket (1) making up at least 50% by weight.

10. A feeding stuff according to any of the preceding claims, **characterised in that** the jacket is extruded in tubular form and after filling is cut to length like a cushion and dried and/or baked.

11. A feeding stuff according to any of the preceding claims, **characterised in that** the jacket comprises two layers of dough which are placed on one another like ravioli and the space between them is filled with particles, followed by punching out, drying and/or baking.

## Revendications

1. Aliment en morceaux imitant une proie pour animaux, en particulier pour chats et chiens, dont chaque morceau présente une forme extérieure fermée et se compose d'une enveloppe extérieure comestible (1) en pâte et d'une autre fraction d'aliment entourée par celle-ci, qui se compose de plusieurs fragments comestibles (2, 2')
**caractérisé en ce que** l'enveloppe externe d'enrobage (1) se compose d'une pâte cuite qui est enrichie en viandes ou en extraits de viandes, **en ce que** les parties comestibles (2, 2') sont cuites croustillantes et que leur granulométrie moyenne est comprise entre 0,2 et 10 mm et **en ce que** les parties comestibles (2, 2') sont agencées de façon mobile à l'intérieur de l'enveloppe externe (1) et se heurtent entre elles et avec l'enveloppe externe (1) et engendrent des bruits, lors de déplacements d'un morceau de l'aliment pour animaux.

2. Aliment pour animaux selon la revendication 1, **caractérisé en ce que** l'enveloppe externe comestible se compose d'une couche externe sèche (4) et d'une couche interne (5) plus humide.

3. Aliment pour animaux selon la revendication 1 ou 2, **caractérisé en ce que** le côté externe de l'enveloppe externe (1) est rendu rugueux, comporte des fibres en saillie, est coloré et/ou inclut des produits aromatiques.

4. Aliment pour animaux selon l'une quelconque des revendications précédentes, **caractérisé en ce que** l'enveloppe externe (1) est en forme de souris ou de poisson.

5. Aliment pour animaux selon l'une quelconque des revendications précédentes, **caractérisé en ce que** l'aliment pour animaux comporte un oeillet (3) pour enfiler un cordon.

6. Aliment pour animaux selon l'une quelconque des revendications précédentes, **caractérisé en ce que** la substance de base des fragments enfermés (2, 2') se compose de glucides, de protéines, de matières grasses, de fibres et de matières minérales.

7. Aliment pour animaux selon l'une quelconque des revendications précédentes, **caractérisé en ce que** les fragments enfermés (2, 2') contiennent des médicaments de médecine vétérinaire, des vitamines, des oligo-éléments, des acides aminés, des agents de conservation, des anti-oxydants ou des correcteurs de goût.

8. Aliment pour animaux selon l'une quelconque des revendications précédentes, **caractérisé en ce que** les fragments enfermés (2, 2') sont dragéifiés.

9. Aliment pour animaux selon l'une quelconque des revendications précédentes, **caractérisé en ce que** la masse des morceaux est comprise entre 0,50 et 50 g et que l'enveloppe externe (1) en constitue au moins 50% en poids.

10. Aliment pour animaux selon l'une quelconque des revendications précédentes, **caractérisé en ce que** l'enveloppe externe est extrudée en forme tubulaire, puis, après garnissage, allongée en forme de coussins et est ensuite séchée et/ou cuite.

11. Aliment pour animaux selon l'une quelconque des revendications précédentes, **caractérisé en ce que** l'enveloppe externe se compose de deux couches de pâte superposées à la manière de ravioli, qui sont garnies de fragments dans la zone intermédiaire, découpées à la matrice, séchées et/ou cuites.
